## Europäisches Patentamt

## European Patent Office

## Office européen des brevets

(11) Publication number: **0 071 416**
**B1**

(12) **EUROPEAN PATENT SPECIFICATION**

(45) Date of publication of patent specification: **08.03.89**

(21) Application number: **82303874.0**

(22) Date of filing: **22.07.82**

(51) Int. Cl.⁴: **F 23 L 17/00, F 23 L 5/02, F 23 N 3/00, F 04 D 25/16, F 04 D 27/00**

(54) A method of operating a combustion apparatus having a fired heater.

(30) Priority: **27.07.81 GB 8123133**
**25.01.82 GB 8202053**

(43) Date of publication of application:
**09.02.83 Bulletin 83/06**

(45) Publication of the grant of the patent:
**08.03.89 Bulletin 89/10**

(84) Designated Contracting States:
**BE DE FR GB IT NL SE**

(56) References cited:
**DE-A-2 409 666**
**DE-C- 547 028**
**GB-A- 219 291**
**GB-A- 426 906**
**GB-A- 938 148**
**GB-A-2 063 364**
**GB-A-2 075 716**
**GB-A-2 090 400**
**US-A-1 848 130**
**US-A-2 160 968**
**US-A-2 202 793**
**US-A-4 011 735**
**US-A-4 060 380**
**US-A-4 262 608**

(73) Proprietor: **FOSTER WHEELER ENERGY LIMITED**
**Foster Wheeler House Station Road**
**Reading Berkshire, RG1 1LX (GB)**

(72) Inventor: **Gilbert, Keith William**
**"Wynton" Rectory Road**
**Padworth Common Berkshire (GB)**

(74) Representative: **Bowman, Paul Alan et al**
**LLOYD WISE, TREGEAR & CO. Norman House**
**105-109 Strand**
**London WC2R OAE (GB)**

Courier Press, Leamington Spa, England.

**Description**

This invention relates to a method of operating a combustion apparatus, such as furnaces, boilers and fired heaters. Particularly it relates to such apparatus utilizing liquid and/or gaseous hydrocarbon fuels and incorporating a balanced draught system. Primary applications of apparatus according to the invention are as a feed preheater in a reactor system and in the furnace section of steam generators.

Energy conservation schemes are now a common feature of new installations and are increasingly being incorporated into old plant. In fired heaters, furnaces, boilers and the like, many of these schemes take the form of combustion air preheating by the outgoing hot flue gases. Such apparatus may comprise a flue gas air preheater of either recuperative or regenerative type, a forced air draught fan (FD fan) to blow the combustion air through the air side of the preheater thence through ducts to the burners, and an induced draught fan (ID fan) to suck the flue gases from the radiant section, over the convection banks and thence through the flue gas side of the air preheater to the ID fan which then discharges the flue gases to a stack or duct work of a common chimney system. The FD fan and the ID fan have individual driving means, normally steam or electric, and each fan, which is generally a centrifugal type fan, has an output controlled by either radial inlet vanes or some form of variable speed system which would alter the rotational speed of the fan itself.

Control of such apparatus is generally split in as much as the systems controlling the ID fan and the FD fan are independent of one another. In the case of a furnace the ID fan would be adjusted either manually or automatically to maintain a fixed pressure in the top furnace, typically 0.1 ins WG water gauge (WG) (24.9 N/m²) below atmospheric. The FD fan would be adjusted either manually or automatically to maintain sufficient air for satisfactory combustion of the fuel required to be burnt. Thus, separate criteria dictate the operation of the respective fans.

It is important that the 0.1 ins WG (24.9 N/m²) below atmospheric arch pressure is attained consistently both during constant run conditions and whilst shifting from one load to another. Even under constant run conditions the ambient pressure reference point is subject to quite violent fluctuations due to wind pressure etc., and it has been found necessary to average the ambient pressure over a specific period, e.g., 15 seconds, otherwise during gusty weather conditions the ID fan system hunts badly. During change over from one load to another it is very easy to upset conditions, particularly under manual control, so that the furnace 'goes positive' and flame is emitted from any openings such as peepdoors, with its attendant danger.

A coal fuelled steam generating plant is described in US—A—2,160,968 in which balanced conditions in the fire box were obtained, with the forced air fan and induced air fan mounted on a single shaft and driven by a single motor, by compensating for the differences in the requirements of the two fans as the throughput changed by adjustment of vanes at the inlet of the induced draught fan. This arrangement avoided the requirements of separate controls of the fans but required the provision of separate inlet air trimming means. A modification of this system envisaged the additional installation of butterfly dampers upstream of the induced draught fan and adjustable vanes at the inlet of the forced draught fan. More recently, a system has been proposed in which the fans operate at constant speed, control is obtained substantially by means of dampers, and a pressure balance is achieved in the combustion chamber by diluting the exhaust upstream of the induced draught fan with atmospheric air by means of a barometric damper.

We have found that a draught system such as is first described above can be effectively and simply balanced over a range of load demands solely by coupling the FD fan and ID fan to each other and a common drive mechanism. The method of the invention is applied to combustion apparatus having a burner section and a draught system therefor, which draught system comprises a variable speed forced draught fan for delivering combustion gas to the burner section and a variable speed induced draught fan for extracting effluent gases therefrom, the respective fans being coupled to the burner section along closed ducts and being coupled together such that their outputs are fixed relative to one another and a predetermined negative pressure is maintained in the burner section at all fan speeds over a range of fan speeds. A fluidic hydrocarbon fuel is burnt in the burner section, and apparatus is controlled in response to load demand solely by simultaneously adjusting the speeds of a the fans while maintaining their said relative outputs, said fixed relationship being maintained over the full operating speed ranges of the fans. By this means a predeterminable relationship is always maintained between the ID and FD fans and balanced conditions are obtained in the burner section without the provision of additional means for adjusting the inflow or outflow of gas to and from the fans. The fans are variable speed fans and the adjustment thus a direct speed control, although inlet vane control may be used for initial fine tuning.

Generally, in the method of operating an apparatus according to the invention a single drive motor is used, preferably of variable speed, but a constant speed motor may be used with for example speed variable coupling to the fans. It is also possible to adopt a system in which a separate electric motor drives each fan, but with the motors powered through a common modulator. Wherever a variable speed electric motor is used, speed control is preferably accomplished using a frequency converter system.

The method of operating a combustion apparatus according to the invention may be used in many applications. A preferred use is as a direct or indirect feed preheater in a reactor system for heating a feedstock before it enters a main reactor. It is though, equally useful in steam generation apparatus.

The invention is based upon the recognition of the interdependence of certain of the parameters in a balanced draught system. Thus:

1) the system resistance in a furnace or the like for both the ID and FD sides varies as a square of the throughput;

2) the output from any centrifugal fan is as follows;

throughput $\alpha$ speed

head $\alpha$ (speed)$^2$.

This means that by utilizing a common drive for the ID and FD fans, or a single modulated supply to otherwise independent electric motors for the fans, by adjusting the speed of the common drive or modulator alone, the output from both the fans can match the system characteristics almost exactly so that the balance point, usually the furnace arch, remains constant at varying throughput without the necessity for additional instrumentation and control. The potential hazard of over or under pressurizing of a large radiant section in a furnace is thereby virtually eliminated without additional instrumentation contributing significantly to furnace safety. Moreover, because a variable speed drive fan has a substantially constant efficiency over a wide speed range, both fans can be turned down yet still maintain high efficiency thus effecting a high energy economy compared with the known system of control by inlet vanes and constant speed drive where the efficiency falls off quite dramatically when a fan is turned down.

Control of a system in accordance with the invention utilizing a variable speed common driving means may be purely by linking the variable speed control to the fuel firing rate of the apparatus. The furnace pressure can be automatically maintained; e.g., 0.1 ins WG (24.9 N/m$^2$) below atmospheric, although this furnace pressure can be trimmed manually by the stack damper in the normal way. In addition, it may be necessary to alter the relationship between the FD and ID fans (due to range of fuel etc.) and this can be effected by fitting the FD fan with manual or automatic inlet vane control (IVC) this is a cheap device and may be arranged so that under normal conditions the inlet vanes are said 10° closed (0° wide open; 90° fully shut) so that they may be opened fully to 0° to increase the air throughput ratio slightly or closed a little to say 20° closed to slightly decrease the air throughput. These inlet vane movements will also slightly alter the furnace pressure thereby providing a further control.

In the event that the systems resistance alters due to lay down of soot in the flue gas side of the system over a prolonged period of operation it will be necessary to compensate. The first compensation is to adjust the stack damper to the fully open position. Should further adjustment be required it will be necessary to alter the ratio controller on the fuel/fan system so that the speed of the fans set is slightly increased. It would then be necessary to close the IVC on the FD fan slightly to prevent too much combustion air being drawn in.

The fans used in the system of the invention are normally of the centrifugal type and may be identical to those which have been used for FD and ID fans in prior balanced draught systems. The use of variable speed drive means that the fan efficiency is virtually constant over the operating range (mechanical losses are the only variables) and thus efficiency of the order of 80% may be achieved for a good quality fan. This applies in general to both ID and FD fans although there will be a slight extra loss of efficiency on the FD fan when an inlet vane control is present.

The driving means used in the invention may be any of the conventional driving means, those in normal use being steam turbine and electric.

The steam turbine does exhibit a significant loss of efficiency when the unit speed is turned down but this can be minimized to some extent by installing extra nozzles for high speed running to be brought in either automatically or manually.

In the case of the electric drive a number of alternatives are available. It is possible to use a constant speed motor and couple this to the fans by means of an hydraulic coupling. However, the hydraulic coupling does have significant losses about the middle range which is where the normal load is and the unit will spend most of its operating life in that range. The principal alternative to this, which is preferred, is to use a frequency converter system to alter the speed of the motor. Another alternative is of course the use of separate electric motors powered through a common modulator as described above.

The invention offers a number of advantages over known arrangements, including the following:—

1. both fans operate on a variable speed system of control hence minimum energy consumption;

2. if using variable speed electric motor control the motor efficiency remains high over speed range hence minimum energy consumption;

3. only one speed control required instead of two hence considerable cost saving;

4. fan control much simpler and better because characteristics of fans match system resistance characteristic;

5. in the case of multiple fired heaters connected to a common single air preheater there is a potential problem of how to share out the air to the burners under each heater. Up to now each take-off duct to an individual heater would have a damper probably controlled off the burner instrumentation and generally the FD fan would be equipped with inlet vane control. The tendency with such a system is for the IVC to remain wide open while all the dampers to the heaters are well shut in to effect good combustion on the heater. The fan is using maximum power under such conditions and to arrange instrumentation to obviate this would be complex and expensive. However, in a system in accordance with the invention the speed of the fan set would be set by the sum of all the fuel flows to the various heaters and this would give just the right amount of air for combustion; hence the individual heater dampers would have to be set as far open as possible and merely ensure each heater gets its proper share of the air available. The fan set would be running at minimum power for the load given.

Other advantages also accrue from the invention, the following particularly from the use of a drive mechanism for the fans which incorporates a single drive motor:

6. one large drive means is cheaper than two smaller individual drive means which have conventionally been used;

7. common baseplate—minimises lining up problems; is smaller than for two individual fans, hence cheaper; occupies minimum plot area;

8. total weight less and unit more compact hence cheaper foundations.

The invention will now be described by way of example and with reference to the accompanying diagrammatic drawings in which:—

Figure 1 represents a schematic diagram of a fired heater and air heater plant incorporating an FD and ID fan and driving means in accordance with the invention;

Figure 2 represents a side elevation of an arrangement of air heater and fans in accordance with the invention;

Figure 3 represents a plan view of the arrangement of Figure 2;

Figures 4a to 4d show various arrangements of FD and ID fans and common driving means;

Figure 5 is a view similar to that of Figure 1, showing an alternative arrangement according to the invention; and

Figure 6 represents a plot showing the draught level in various positions of a furnace having a balanced draught system.

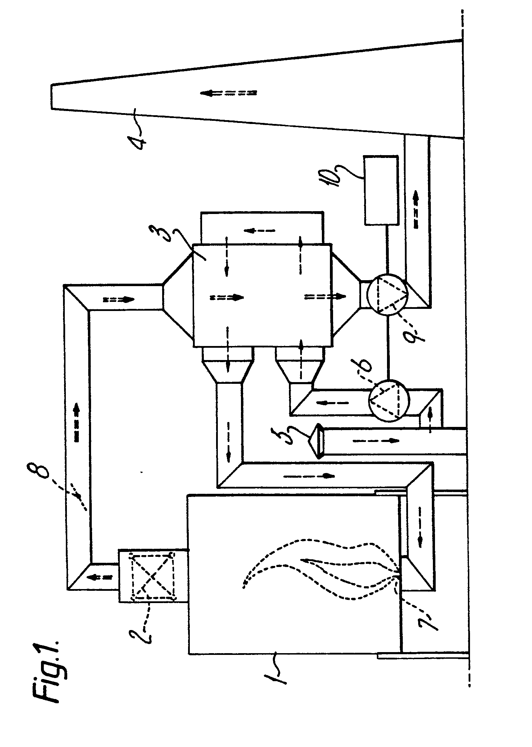

Figure 1 shows a fired heater 1, a convection bank 2, an air heater 3 and a stack 4. Combustion air is drawn into the system through the air inlet 5 and passes through a forced draught fan 6 and through the air heater 3 in which it passes in heat exchange relationship with flue gas, and thence to the fired heater 1 where fuel is burnt by burners 7. The hot gases from the fired heater pass through the convection bank 2 of for example a feed preheater or a steam generator, past a damper 8 and through associated conduit into the air heater 3 and thence through an induced draught fan 9 to stack 4. The forced draught fan 6 and the induced draught fan 9 are connected to the same variable speed driver 10.

In the arrangement of Figure 1 the speeds of the two fans 6, 9 are always in the same relation to one another, and variation of the speed of the driver 10 simultaneously adjusts both fans 6, 9. Control of the driver 10 may be linked to the fuel firing rate of the burners by means of a monitor (not shown). Additionally or alternatively, one or more pressure monitors may be mounted in the apparatus to monitor the pressures in the system, particularly the arch pressure over the burners. Signals generated by these monitors are used to control the driver 10.

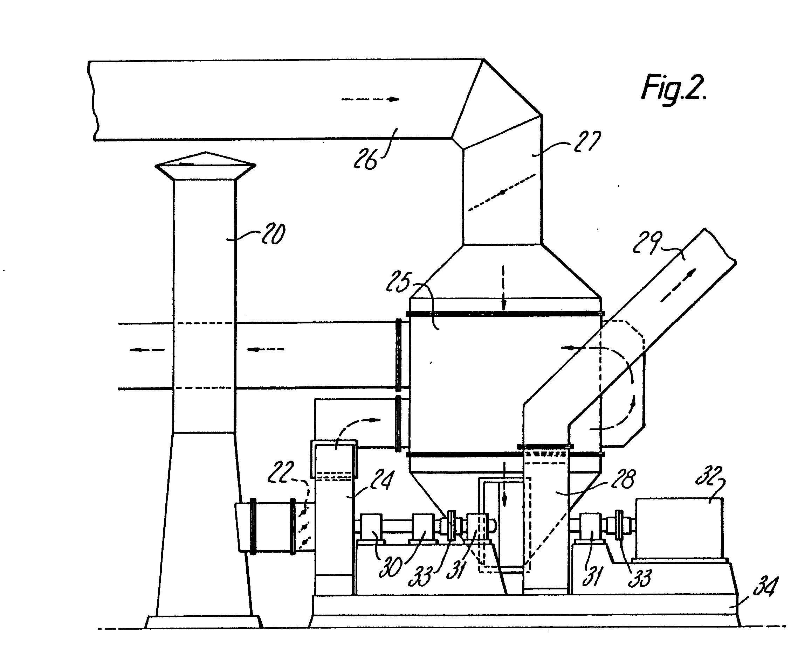

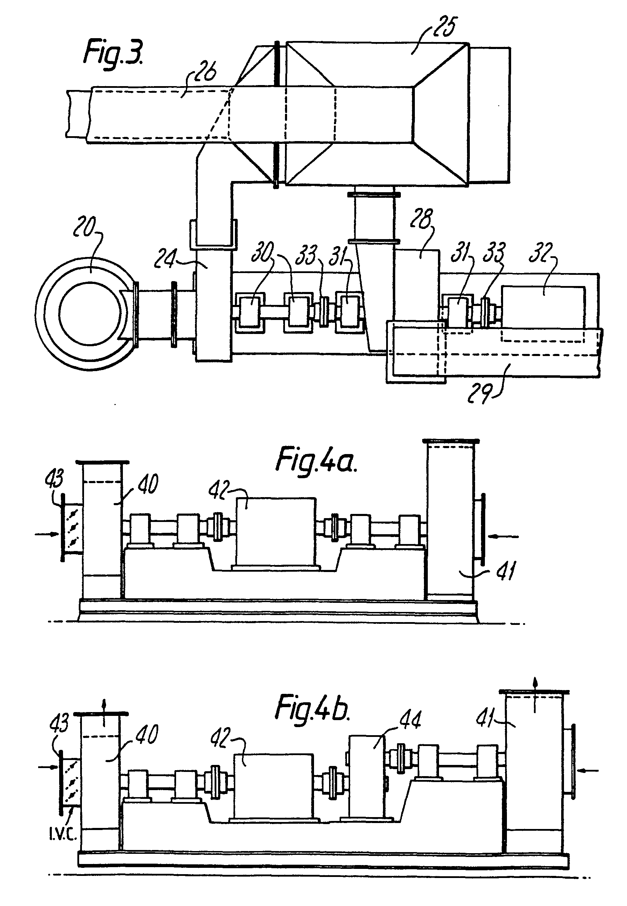

Figures 2 and 3 show an arrangement of an air heater and fans for use with a fired heater, furnace or the like. The apparatus comprises an air inlet stack 20 through which combustion air enters, and inlet vane control 22 and a forced draught fan 24. Air passes through the inlet vane control and forced draught fan into an air heater 25 in heat exchange relationship with glue gas from the fired heater. Upon exit from the air heater the heated combustion air passes through suitable conduits into the radiant section of the heater. Flue gas from the fired heater passes through conduit 26 via a control damper 27 into the air heater 25, through the induced draught fan 28 and exits through conduit 29 to a stack. The forced draught fan 24 is mounted on suitable bearings 30 and the induced draught fan 28 is mounted upon fan bearing 31. A variable speed driver 32 is coupled to the fans via couplings 33. The fans, driver and associated bearings and couplings are mounted upon a common base frame 34 thus providing a compact arrangement for controlling the balanced draught system.

Various arrangements of driver and fans are illustrated in Figures 4a to 4e. Figure 4a illustrates a system in which the FD fan 40 and the ID fan 41 are coupled directly to a variable speed driver 42 mounted between the two fans. An inlet vane control 43 is provided on the inlet side of the FD fan. The ID and FD fans are driven at identical speeds which may be varied by varying the speed of the driver. The inlet vane control provides an additional means of balancing the pressure within the system.

Figure 4b illustrates a similar system to that shown in Figure 4a with the exception that a fixed ratio gearbox 44 is provided between the driver and the ID fan whereby the ID fan is driven at a lower speed to the FD fan. The fans are driven at a fixed ratio to each other which ratio remains the same as the speed of the driver is varied.

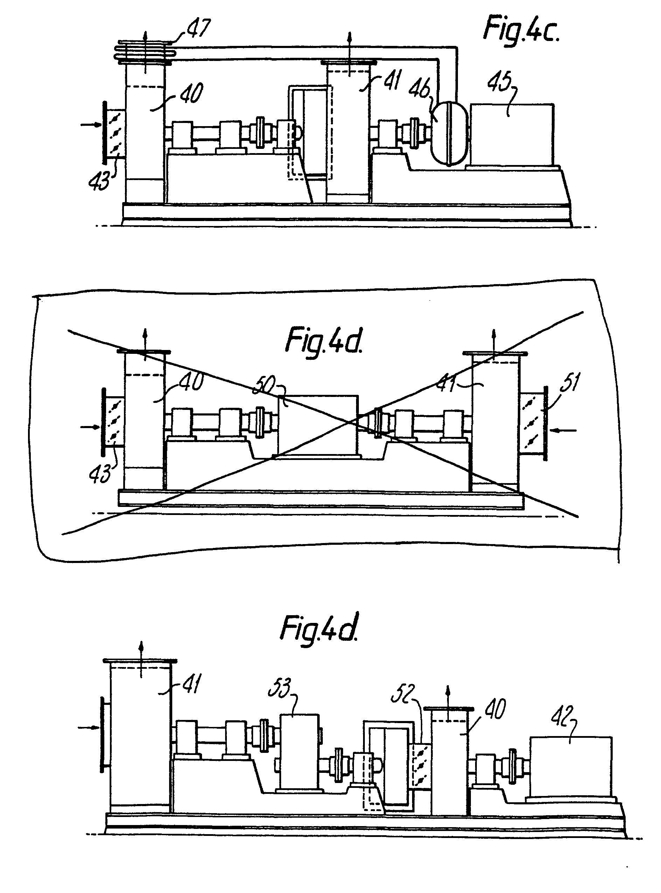

Figure 4c shows an arrangement utilizing a constant speed driver 45 which is connected to the FD fan 40 and ID fan 41 via a variable speed hydraulic coupling 46. An oil cooler 47 for the variable speed hydraulic coupling may be conveniently provided in the FD fan ducting. The speed of the two fans may be varied by controlling the varible speed hydraulic coupling. This arrangement is not as efficient as utilizing a variable speed driver in as much as the constant speed driver with hydraulic coupling utilizes more power at the middle portion of the turn-down range of output of the fans.

Figure 4d illustrates a further arrangement comprising a variable speed driver 42 linked directly to an FD fan 40 having an inlet vane control 52. The FD fan is linked to an ID fan 41 via a fixed ratio gearbox 53 arranged such that the ID fan runs at a lower speed than the FD fan.

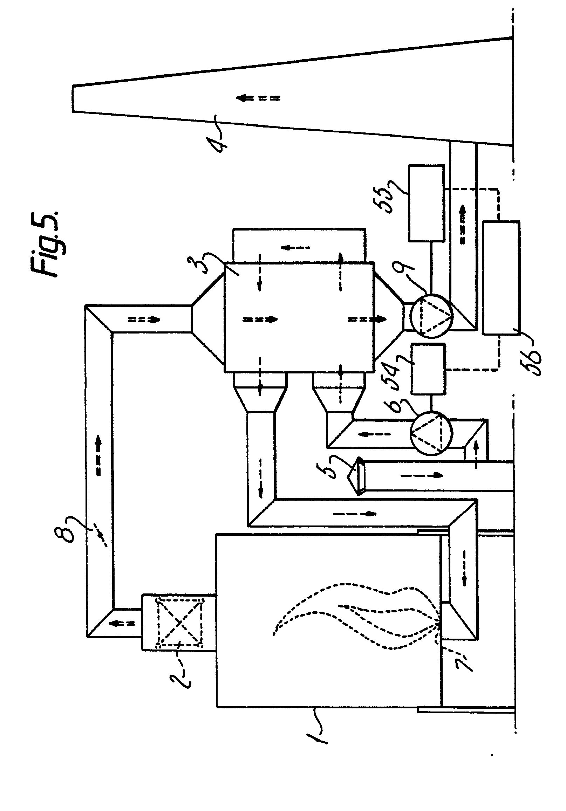

Figure 5 shows the same arrangement as is illustrated in Figure 1 with the difference that the two fans 6, 9 have their own separate electric motor 54 and 55. The two motors are supplied with power through a common electric modulator 56.

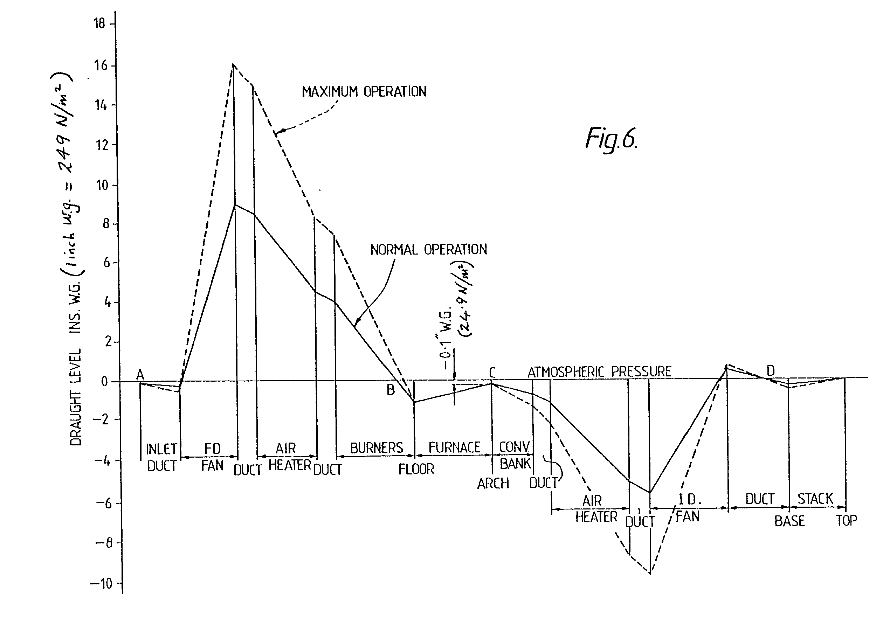

Figure 6 is a diagram of the draught levels in a typical furnace system incorporating an air heater and shows that each fan has its own area of influence in a balanced draught system.

In the case of the Fd fan it is from the air intake (at atmospheric pressure) Point A to the nil (atmospheric) pressure point in the burner, Point B. The position of these points never varies and this system operates under the normal laws governing ducted air systems.

The draught occasioned by the furnace at the floor of the furnace remains virtually the same over the load range because the furnace temperature does not vary much.

For the ID fan its system starts with the arch at −0.1 ins WG (24.9 N/m²) Point C and ends at some nill point where the stack flue gas temperature does not change greatly over a wide range of operating levels because of the influence of the air heater hence the nill point does not alter position greatly. Thus because the ID fan head is great compared with the arch pressure we can consider the arch pressure to be atmospheric and because the stack end nil point does not move much we can again consider this system to obey the normal laws.

If the temperature levels remained constant over the whole operating range the pressure drop of both systems would obey the square law

$$DP_1 = DP_2 \left( \frac{G_1}{G_2} \right)^2$$

where G is the mass flow rate.

However, because the air temperature to the burners varies with load, part of the FD fan system has a modified pressure drop that depends on the specific volume of the air which in turn is influenced by the air temperature.

Similarly the ID fan system is influenced by flue gas temperature.

The net result is a slight imbalance between the two systems. If however this is plotted on a typical fan performance curve the net effect is negligible and the controlling factor is the air/flue gas throughput. Any discrepancy occurring can be easily compensated for by use of the inlet vane control on the FD fan or the stack damper. Thus, a balanced draught can be obtained and maintained by a system in accordance with the invention by maintaining the speed of each fan in a fixed ratio utilizing a common driving means or a common electric speed modulator.

## Claims

1. A method of operating a combustion apparatus having a fired heater (1) and a draught system therefor, which draught system comprises a variable speed forced draught fan (6, 24, 40) for delivering combustion air to the fired heater (1) and a variable speed induced draught fan (9, 28, 41) for extracting effluent gases therefrom, the respective fans (6, 9, 24, 28, 40, 41) being coupled to the fired heater (1) along closed ducts and being coupled together such that their outputs are fixed relative to one another over a range of speeds such that a predetermined negative pressure is maintained in the fired heater (1) at all fan speeds within said range; characterised in that a fluidic hydrocarbon fuel is burnt in the fired heater (1), and the operation of the apparatus is controlled in response to load demand solely by the simultaneous adjustment of the speeds of the fans (6, 9, 24, 28, 40, 41) while maintaining their said fixed relative outputs, said fixed relationship being maintained over the full operating speed ranges of the fans.

2. A method according to Claim 1 characterised in that the fans are driven by a mechanism (10, 32, 42, 45, 50, 55) comprising a steam turbine.

3. A method according to Claim 1 characterised in that the fans are driven by a mechanism (10, 32, 42, 45, 50, 55) comprising an electric motor.

4. A method according to Claim 3 characterised in that adjustment of the fan speeds is effected using a frequency converter system.

5. A method according to Claim 3 or Claim 4 characterised in that adjustment of the fan speeds is effected using a common modulator (56) connected to a separate electric motor for each fan.

6. A method according to any of Claims 1 to 4 characterised in that the fans have different operating speed ranges, and are coupled to a single drive motor (42), one through a gearbox (44).

7. A method according to any preceding Claim characterised in that the fans are set to establish said predetermined negative pressure by initial adjustment of an inlet vane control (43) on at least one of the two fans.

8. A method according to any preceding Claim characterised in that adjustment of the fan speeds is linked to signals generated by at least one fuel firing rate monitor connected in the fuel supply to the fired heater to match the system characteristics at all times.

## Patentansprüche

1. Verfahren zum Betätigen einer Verbrennungsvorrichtung mit einer Brennheizvorrichtung (1) und einem zugehörigen Zugsystem, das ein Druck - Zuggebläse variabler Geschwindigkeit (6, 24, 40) zum Zuführen von Verbrennungsluft zu der Brennheizvorrichtung (1) und ein Saug - Zuggebläse variabler Geschwindigkeit (9, 28, 41) zum Abziehen der Abgase aufweist, wobei die jeweiligen Gebläse (6, 9, 24, 28, 40, 41) mit der Brennheizvorrichtung (1) über geschlossene Leitungen verbunden und miteinander so gekoppelt sind, daß ihre Outputs relativ zueinander über einen Geschwindigkeitsbereich feststehend sind, so daß ein vorbestimmter Unterdruck in der Brennheizvorrichtung (1) bei allen Gebläsegeschwindigkeiten innerhalb dieses Bereichs aufrecht erhalten wird, dadurch gekennzeichnet, daß in der Brennheizvorrichtung (1) ein flüssiger Kohlenwasserstoff - Brennstoff verbrannt wird und daß der Betrieb der Vorrichtung hinsichtlich des Verbrauchsbedarfs lediglich durch gleichzeitige Einstellung der Geschwindigkeiten der Gebläse (6, 9, 24, 28, 40, 41) gesteuert wird, wobei deren relative Outputs konstant bleiben und diese feststehende Beziehung über die gesamten Betriebsgeschwindigkeitsbereiche der Gebläse aufrecht erhalten werden.

2. Verfahren nach Anspruch 1, dadurch gekennzeichnet, daß die Gebläse von einem Mechanismus (10, 32, 42, 45, 50, 55) angetrieben werden, der eine Dampfturbine enthält.

3. Verfahren nach Anspruch 1, dadurch gekennzeichnet, daß die Gebläse von einem Mechanismus (10, 32, 42, 45, 50, 55) angetrieben werden, der einen Elektromotor enthält.

4. Verfahren nach Anspruch 3, dadurch gekennzeichnet, daß die Einstellung der Gebläsegeschwindigkeiten unter Verwendung eines Frequenzwandlersystems hervorgerufen wird.

5. Verfahren nach Anspruch 3 oder 4, dadurch gekennzeichnet, daß die Einstellung der Gebläsegeschwindigkeiten unter Verwendung eines gemeinsamen Modulators (56) hervorgerufen wird, der mit einem getrennten elektrischen Motor für jedes Gebläse verbunden ist.

6. Verfahren nach einem der Ansprüche 1 bis 4, dadurch gekennzeichnet, daß die Gebläse unterschiedliche Betriebsgeschwindigkeitsbereiche haben und mit einem einzigen Antriebsmotor (42) gekoppelt sind, eines der Gebläse über einen Getriebekasten (44).

7. Verfahren nach einem der vorhergehenden Ansprüche, dadurch gekennzeichnet, daß die Gebläse durch anfängliche Einstellung einer Einlaßflügelsteuerung (43) an wenigstens einem der beiden Gebläse eingestellt sind, um den vorbestimmten Unterdruck hervorzurufen.

8. Verfahren nach einem der vorhergehenden Ansprüche, dadurch gekennzeichnet, daß die Steuerung der Gebläsegeschwindigkeiten mit Signalen verbunden ist, die von wenigstens einem Monitor zur Überwachung der Brennstoffmenge erzeugt werden, wobei der Monitor in der Brennstoffzufuhr mit der Brennheizvorrichtung verbunden ist, so daß jederzeit die Systemkennwerte angepaßt werden.

**Revendications**

1. Méthode de commande d'un appareil de combustion comportant un dispositif de chauffage par combustion (1) et un système de tirage pour celui-ci, ledit système de tirage comprenant un ventilateur à tirage forcé à vitesse variable (6, 24, 40) pour fournir l'air de combustion au dispositif de chauffage par combustion (1) et un ventilateur à tirage induit à vitesse variable (9, 28, 41) pour en extraire les effluents gazeux, les ventilateurs respectifs (6, 9, 24, 28, 40, 41) étant couplés au dispositif de chauffage par combustion (1) le long de conduites fermées et étant couplés ensemble de manière à ce que leurs sorties soient fixes l'une par rapport à l'autre sur une gamme de vitesses telle qu'une pression négative prédéterminée soit maintenue dans le dispositif de chauffage par combustion (1) pour toutes les vitesses des ventilateurs comprises dans ladite gamme, caractérisée en ce qu'un combustible hydrocarboné fluid est brûlé dans le dispositif de chauffage par combustion (1) et en ce que le fonctionnement de l'appareil est commandé en réponse aux exigences de charge uniquement par le réglage simultané des vitesses des ventilateurs (6, 9, 24, 28, 40, 41) tout en maintenant leurs dites sorties relatives fixes, cette relation fixe étant maintenue sur l'intégralité des gammes de vitesse de fonctionnement des ventilateurs.

2. Méthode selon la revendication 1, caractérisée en ce que les ventilateurs sont entraînés par un mécanisme (10, 32, 42, 45, 50, 55) comportant une turbine à vapeur.

3. Méthode selon la revendication 1, caractérisée en ce que les ventilateurs sont entraînés par un mécanisme (10, 32, 42, 45, 50, 55) comportant un moteur électrique.

4. Méthode selon la revendication 3, caractérisée en ce que le réglage des vitesses des ventilateurs est effectué à l'aide d'un système de conversion de fréquence.

5. Méthode selon la revendication 3 ou la revendication 4, caractérisée en ce que le réglage des vitesses des ventilateurs est effectué à l'aide d'un modulateur commun (56) relié à un moteur électrique séparé pour chaque ventilateur.

6. Méthode selon l'une quelconque des revendications 1 à 4, caractérisée en ce que les ventilateurs ont des gammes de vitesses de fonctionnement différentes et sont couplés à un moteur d'entraînement unique (42), l'un par l'intermédiaire d'une boîte d'engrenages (44).

7. Méthode selon l'une quelconque des revendications précédentes, caractérisée en ce que les ventilateurs sont réglés de manière à établir ladite pression négative prédéterminée par le réglage initial d'une commande par ailettes d'admission (43) d'au moins l'un des deux ventilateurs.

8. Méthode selon l'une quelconque des revendications précédentes, caractérisée en ce que le réglage des vitesses des ventilateurs est associé aux signaux engendrés par au moins un contrôleur du taux auquel le combustible arrive aux brûleurs qui est connecté dans l'alimentation en combustible au dispositif de chauffage par combustion de manière à être adapté aux caractéristiques du système à tout moment.

Fig.1.

Fig.2.

Fig.3.

Fig.4a.

Fig.4b.

I.V.C.

Fig.4c.

Fig.4d.

Fig.4d.

Fig.5.

EP 0 071 416 B1

Fig.6.

DRAUGHT LEVEL INS. W.G. ($1\,inch\ w.g. = 249\ N/m^2$)

MAXIMUM OPERATION

NORMAL OPERATION

$-0.1"$ W.G. ($24.9\ N/m^2$)

ATMOSPHERIC PRESSURE

INLET DUCT | FD FAN | DUCT | AIR HEATER | DUCT | BURNERS | FURNACE FLOOR | CONV BANK | ARCH | DUCT | AIR HEATER | DUCT | I.D. FAN | DUCT | STACK BASE | TOP

A    B    C    D

EP 0 071 416 B1